# EUROPÄISCHE PATENTSCHRIFT

(11) **EP 0 644 983 B1**
(45) Veröffentlichungstag und Bekanntmachung des Hinweises auf die Patenterteilung: **14.08.1996**
(21) Anmeldenummer: 93909533.7
(22) Anmeldetag: 21.05.1993
(51) Int. Cl.: F02M 61/08, F02M 61/04

(54) **EINSPRITZDÜSE FÜR BRENNKRAFTMASCHINEN**
INJECTION NOZZLE FOR INTERNAL COMBUSTION ENGINES
INJECTEUR DE CARBURANT POUR MOTEURS A COMBUSTION INTERNE

(30) Priorität: 10.06.1992 DE 4218980; 26.08.1992 DE 4228359
(43) Veröffentlichungstag der Anmeldung: 29.03.1995
(73) Patentinhaber: ROBERT BOSCH GMBH, 70442 Stuttgart (DE)
(72) Erfinder: POTZ, Detlev, D-70193 Stuttgart-Nord (DE); LEWENTZ, Guenter, D-71282 Hemmingen (DE); GORDON, Uwe, D-7000 Stuttgart 1 (DE)
(86) Internationale Anmeldenummer: DE9300447
(87) Internationale Veröffentlichungsnummer: WO9325814

(56) Entgegenhaltungen:
- EP-A- 0 460 381
- DE-A- 3 909 893
- DE-A- 4 006 488
- FR-A- 795 194
- FR-A- 2 289 756
- FR-A- 2 370 870

## Beschreibung

### Stand der Technik

Die Erfindung geht aus von einer Kraftstoffeinspritzdüse für Brennkraftmaschinen nach dem Oberbegriff des Anspruchs 1. Bei einer aus der DE-OS 40 06 488 bekannten Einspritzdüse dieser Art hat die Ventilnadel im Umfang des als Bund ausgebildeten Kolbens mehrere achsparallele Längsnuten, die sich stromab von der die Druckkammer begrenzenden Stirnfläche des Kolbens zu dessen Ventilkegel hin erstrecken. Beim Öffnunghub der Ventilnadel wird der dem Ventilkegel nahe Bereich der Längsnuten fortlaufend als Spritzquerschnitt freigegeben, wobei der resultierende Strömungsvektor stets durch die kürzeste Strecke vom Einlauf der Längsnuten zum Spritzquerschnitt gebildet wird. Da die Längsnuten achsparallel bis zum Spritzquerschnitt verlaufen, erhält der Spritzstrahl eine stark axiale Richtungskomponente; eine Orientierung in einem bestimmten, dem Brennraum der Brennkraftmaschine angepaßten Kegelwinkel ist nicht möglich.

Eine genaue Ausrichtung der Spritzstrahlen in einem bestimmten Kegelwinkel ist zwar bei einer Kraftstoffeinspritzdüse nach der EP-A-209 244 vorhanden, bei der die Spritzrichtung durch Spritzlöcher bestimmt ist, welche den Schaft der hohlgebohrten Ventilnadel nahe dem Ventilkegel in einem stumpfen Kegelwinkel durchsetzen. Durch Aufweiten oder Atmen der hohlen Ventilnadel bei hohen Drücken treten bei dieser Ausbildung der Ventilnadel Probleme hinsichtlich einer zuverlässigen Funktion auf. Ferner steht die Axialbohrung im Schaft der Ventilnadel einer Miniaturisierung der Einspritzdüse entgegen.

### Vorteile der Erfindung

Die erfindungsgemäße Kraftstoffeinspritzdüse mit den kennzeichnenden Merkmalen des Anspruchs 1 hat den Vorteil, daß Spritzstrahlen mit scharf gebündeltem Strömungsprofil und mit einem konstanten Strömungswinkel gebildet werden, wie dies für eine direkt einspritzende Brennkraftmaschine erforderlich ist. Ferner ist durch die versetzte Anordnung der Durchbrüche gegenüber der Dichtfläche des Schließkopfes sichergestellt, daß erst nach Durchlaufen eines Leerhubes der Ventilnadel bei geringem Kraftstofförderdruck bzw. kleiner Drehzahl scharf gebündelte Spritzstrahlen gebildet werden, die für eine gute Kraftstoffaufbereitung sorgen. Ferner ist durch den verhältnismäßig groß ausbildbaren Querschnitt der Ausnehmung an der der Druckkammer zugewandten Stirnseite des Kolbens des Schließkopfes ein ungedrosselter Zulauf zum Einlauf der Durchbrüche gewährleistet.

Durch die in den Unteransprüchen aufgeführten Maßnahmen sind vorteilhafte Weiterbildungen und Verbesserungen der im Anspruch 1 angegebenen Kraftstoffeinspritzdüse möglich. Durch die Gestaltung des Kolbens der Ventilnadeln nach Anspruch 2 ist eine besonders drosselungsarme Strömung des Kraftstoffs zu den Druchbrüchen und durch diese zu den Spritzöffnungen gegeben. Dadurch wird ein sehr hoher Wirkungsgrad bei der Umsetzung von Druck in Geschwindigkeit erzielt. Durch die Ausrichtung der Durchbrüche nach Anspruch 3 wird ein Einspritzprofil wie bei Mehrlochdüsen erzielt. Die Einspritzcharakteristik wird durch die Merkmale nach den Ansprüchen 4 bis 6 günstig beeinflußt. Besonders vorteilhaft ist die Ausbildung nach Anspruch 9, wodurch ein definiertes Aufliegen der Dichtfläche des Schließkopfes am Ventilsitz des Düsenkörpers gewährleistet ist. Ein einwandfreies, definiertes Anliegen des Ventilkegels am Ventilsitz des Düsenkörpers in Form eines Liniensitzes wird durch die Merkmale des Anspruchs 10 erzielt.

### Zeichnung

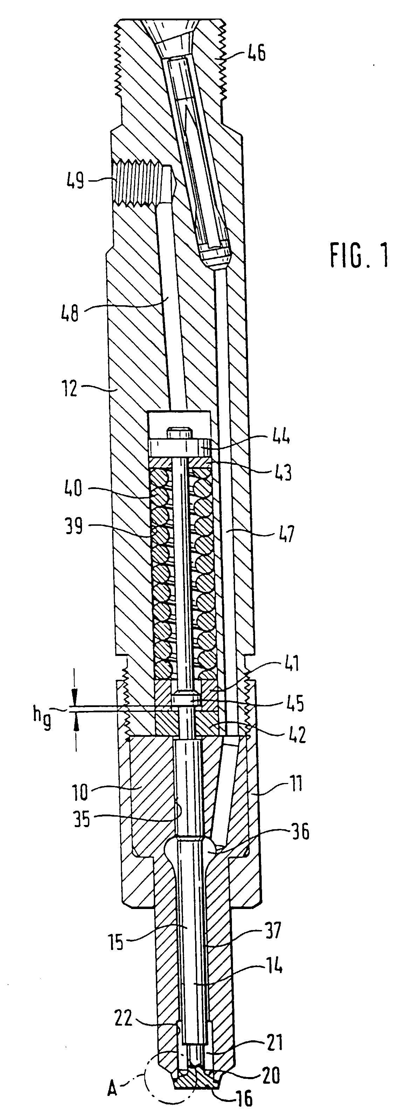

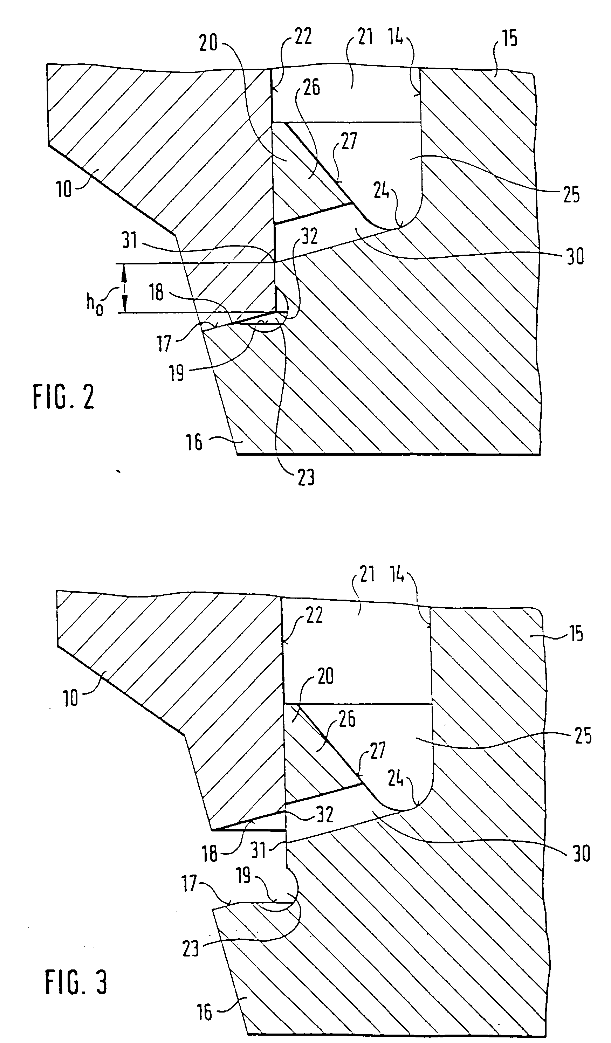

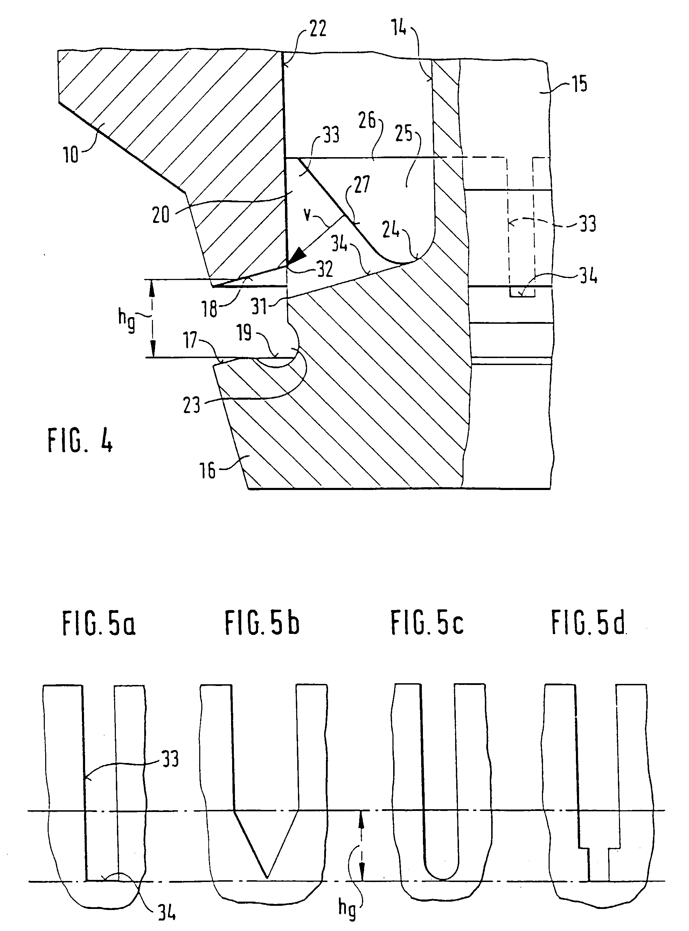

Zwei Ausführungsbeispiele der Erfindung sind in der Zeichnung dargestellt und werden im folgenden näher erläutert. Es zeigen Figur 1 eine Einspritzdüse im Längsschnitt, die Figuren 2 und 3 den brennraumseitigen Endabschnitt A des ersten Ausführungsbeispiels der Einspritzdüse nach Figur 1 vergrößert im Querschnitt in Schließ- und in Offenstellung, Figur 4 den brennraumseitigen Endabschnitt A des zweiten Ausführungsbeispiels vergrößert im Querschnitt und Figur 5 Gestaltungsformen von Nuten des zweiten Ausführungsbeispiels nach Figur 4 vereinfacht in Seitenansicht.

### Beschreibung des Ausführungsbeispiels

Die Einspritzdüse hat einen Düsenkörper 10, der mittels einer Überwurfmutter 11 an einem Düsenhalter 12 festgespannt ist. Im Düsenkörper 10 ist eine Ventilnadel 15 verschiebbar gelagert, die am brennraumseitigen Ende einen Schließkopf 16 trägt. Dieser hat an einer Schulter einen Ventilkegel 17, der mit einem konischen Ventilsitz 18 am Düsenkörper 10 zusammenwirkt. Der Winkel des Ventilsitzes 18 ist etwas kleiner oder vorzugsweise größer als der Winkel des Ventilkegels 17 am Schließkopf 16, so daß die Ventilnadel 15 mit ihrem Ventilkegel 17 in einer Kreilslinie als Dichtsitz am Ventilsitz 18 des Düsenkörpers 10 anliegt. Radial abgesetzt zum Ventilkegel 17 hat der Schließkopf 16 einen Kolben 20, der in einer eine Druckkammer 21 bildenden Zylinderbohrung 22 im Düsenkörper 10 geführt ist. Am Übergang des Ventilkegels 17 zum Kolben 20 ist ein gerundeter Freistich 23 angeordnet, der ein einwandfreies, definiertes Aufliegen des Ventilkegels 17 am Ventilsitz 18 sicherstellt. Vorzugsweise verbindet eine schmale radiale Ringfläche 19 der Schulter den Ventilkegel 17 mit dem Freistich 23.

Auf seiner dem Druckraum 21 zugewandten Stirnseite hat der Kolben 20 eine den Schaft 14 der Ventilnadel 15 umgebende ringförmige, als Hinterstich ausgebildete Ausnehmung 25, die radial außen von einem Mantel 26 des Kolbens 20 begrenzt ist. Die äußere vom Mantel 26 begrenzte Wandfläche 27 der Ausnehmung 25 ist kegelig und hat einen Neigungswinkel von vorzugsweise 40 bis 50 Grad, so daß sich die Ausnehmung 25 zum Druckraum 21 hin weit öffnet. Den Mantel 26 des Kolbens 20 durchsetzen mehrere, beispielsweise vier Durchbrüche, die die Spritzquerschnitte bestimmen. Beim Ausführungsbeispiel nach den Figuren 2 und 3 sind die Durchbrüche als Löcher 30 ausgebildet, die vom Grund 24 der Ausnehmung 25 ausgehen und in einem bestimmten Abstand oberhalb des Ventilkegels 17 des Schließkopfes 16 münden. Die Löcher 30 verlaufen radial schräg zur Mittelachse der Ventilnadel 15, vorzugsweise in einem Winkel, der gleich dem Kegelwinkel des Ventilsitzes 18 des Düsenkörpers 10 und des Ventilkegels 17 des Schließkopfes 16 bzw. dem erforderlichen Einspritzwinkel der Spritzstrahlen ist. Die Spritzlöcher 30 können einen zylindrischen Querschnitt haben, vorzugsweise haben sie einen zur Mittelachse der Ventilnadel 15 parallel langestreckten Querschnitt, beispielsweise den eines flachen Ovals oder eines Rechtecks. Je nach dem gewünschten Verlauf des Öffnungsquerschnitts kann jeder geschlossene Kurvenzug verwirklicht sein. In dem dem Ventilkegel 17 nahen Grund kann der Querschnitt enger gestaltet sein als darüber.

Beim Ausführungsbeispiel nach Figur 4, das im wesentlichen wie das nach den Figuren 1 bis 3 gestaltet ist, haben die die Spritzquerschnitte bildenden Durchbrüche alternativ die Form von den Mantel 26 des Kolbens 20 von der Stirnseite her bis zum Grund 24 der Ausnehmung 25 durchsetzenden schmalen Nuten 33. Der Grund 34 dieser Nuten 33 verläuft ähnlich wie die Achse der Löcher 30 radial schräg zur Mittelachse der Ventilnadel 15. Der Querschnitt der Nuten 33 ist größtenteils rechteckig; zur Bildung einer bestimmten Querschnitt-Charakteristik der Spritzstrahlen in Abhängigkeit vom Hub hg der Ventilnadel 15 ist der Querschnitt zumindest im Bereich der Mündung am Umfang des Mantels 26, wie die Figuren 5a - 5d zeigen, vom Grund 34 her gleichförmig breit (a), erweitert sich dreieckförmig (b), bogenförmig (c) oder gestuft (d), so daß beim Anfangshub der Ventilnadel 15 zunächst ein feiner und bei fortlaufendem Hub ein kompakter Einspritzstrahl gebildet wird. In gleicher Weise können die Mündungen auch der Löcher des Ausführungsbeispiels nach den Figuren 2 und 3 gestaltet sein.

In Schließstellung der Ventilnadel 15 hat die Unterkante 31 der Mündung der Löcher 30 bzw. der Nuten 33 zum Ventilsitz 18 im Düsenkörper 10 einen bestimmten Abstand hₒ, so daß die Ventilnadel 15 beim Öffnungshub zuerst einen Leerhub ausführt, bevor der Mündungsquerschnitt der Löcher 30 bzw. der Nuten 33 von einer Steuerkante 32 am Übergang des Ventilsitzes 18 in die Zylinderbohrung 22 freigegeben und fortlaufend aufgesteuert wird (Figuren 3 und 4).

Die Ventilnadel 15 ist in einer Führungsbohrung 35 im Düsenkörper 10 verschiebbar gelagert, an die sich stromabwärts eine Sammelkammer 36 und ein diese mit dem Druckraum 21 verbindender Ringspalt 37 anschließen. Die Ventilnadel 15 wird mit ihrem Schließkopf 16 gegen den Ventilsitz 18 am Düsenkörper 10 von einer Schließfeder 40 gezogen, die in einer Federkammer 39 im Düsenhalter 12 angeordnet ist. Die Schließfeder 40 stützt sich über eine Distanzbuchse 41 und eine geschlitzte Anschlagscheibe 42 am Düsenkörper 10 ab und drückt über eine Ausgleichscheibe 43 gegen einen am Ende der Ventilnadel 15 befestigten Stützring 44. Zum Begrenzen des Gesamthubes h_{g} der Ventilnadel 15 ist der Schaft 14 der Ventilnadel 15 in Höhe der Anschlagscheibe 42 einen Anschlagbund 45 bildend abgesetzt, der in Schließstellung der Ventilnadel 15 von der Anschlagscheibe 42 den Abstand h_{g} hat.

Zu der Sammelkammer 36 im Düsenkörper 10 führt ein von einem Anschlußstutzen 46 ausgehender Zulaufkanal 47 im Düsenhalter 12 und im Düsenkörper 10. Ferner verbindet ein Leckölkanal 48 die Federkammer 39 mit einem Anschluß 49.

Die beschriebene Einspritzdüse arbeitet wie folgt:

In den Einspritzpausen drückt die Schließfeder 40 die Ventilnadel 15 mit dem Ventilkegel 17 des Schließkopfes 16 gegen den Ventilsitz 18 am Düsenkörper 10, wobei die Mündung der Spritzlöcher 30 bzw. der Nuten 33 von der die Zylinderbohrung 22 umgebenden Wand des Düsenkörpers 10 überdeckt sind und der Dichtkegel 17 am Ventilsitz 18 dicht anliegt (Figur 2). Beim Zuführen von Kraftstoff unter Druck durch den Zulaufkanal 47 in die Sammelkammer 36 und von dort durch den Ringspalt 37 in den Druckraum 21 baut sich in diesem ein Druck auf, der auf den Kolben 20 des Schließkopfes 16 wirkt, so daß die Ventilnadel 15 entgegen der Wirkung der Schließfeder 40 in Strömungsrichtung verschoben wird. Nach Durchlaufen eines Leerhubes hₒ, der vom Abstand zwischen der Unterkante 31 der Löcher 30 bzw. der Nuten 33 und der theoretischen Schnittlinie des Ventilkegels 17 mit dem Mantel 26 des Kolbens 20 bestimmt ist, wird die Unterkante 31 der Spritzlöcher 30 bzw. Nuten 33 über die Steuerkante 32 geschoben und gibt, gesteuert durch den Nadelhub, zunehmend einen definierten Spritzquerschnitt frei. Nadelhub und Spritzquerschnitt ergeben sich jeweils aus dem Gleichgewicht der Kraft der Schließfeder 40 und der hydraulischen Kraft am Kolben 20. Durch den freigegebenen Spritzquerschnitt an der Mündung der Spritzlöcher 30 bzw. Nuten 33 strömt Kraftstoff in Form von gebündelten Spritzstrahlen in den Brennraum der Brennkraftmaschine in einem bestimmten Kegelwinkel wie bei Mehrlochdüsen. Bei dem Ausführungsbeispiel nach den Figuren 2 und 3 bestimmt dabei der Verlauf der Längsachse der Löcher 30 die Spritzrichtung. Bei dem Ausführungsbeispiel nach Figur 4 ergibt sich, da die Strömung stets den kürzesten Weg zwischen Einlauf und Mündung der Nuten 33 nimmt, ein zum Austrittsquerschnitt weisender, zum Grund 34 der Nuten 33 geneigter, als Pfeil dargestellter, Strömungsvektor v. Da die Spritzlöcher 30 bzw. Nuten 33 jeweils einen Strömungskanal darstellen, der sich vom Einlauf bis zum Spritzquerschnitt verengt, wird der Einspritzdruck verlustarm in Geschwindigkeit umgesetzt, wobei der Effekt eines extrem kurzen Spritzlochs mit hohem Düsenwirkungsgrad erzielt wird. Durch die Formgebung des Querschnitts der Löcher 30 bzw. Nuten 33 als Rechteck, Dreieck, Oval, auch andere Kurvenzüge sind denkbar, werden der Einspritzdüse verschiedene Querschnittsöffnungsverläufe aufgeprägt. Auf diese Weise läßt sich vorzugsweise in Verbindung mit der Charakteristik der Schließfeder 40 und der Pumprate der Einspritzpumpe, der zeitliche Einspritzverlauf für eine optimale motorische Verbrennung beeinflussen. Durch die vorgenannte Gleichgewichtsbedingung wird stets der gerade für die Kraftstoffaufbereitung optimale Spritzquerschnitt eingestellt.

Beim Abbau des Druckes des geförderten Kraftstoffs zieht die Schließfeder 40 die Ventilnadel 15 wieder zurück, wobei zunächst die Spritzlöcher 30 bzw. Nuten 33 zugesteuert werden und dann der Ventilkegel 17 des Schließkopfes 16 am Ventilsitz 18 wieder dicht abschließt.

Ergänzend wird bemerkt, daß die Längsachse der Spritzlöcher 30 in der gewünschten Spritzrichtung der Spritzstrahlen ausgerichtet und dem Ausrichtungswinkel entsprechend der Neigungswinkel des Ventilsitzes 18 und des Ventilkegels 17 gestaltet wird.

## Patentansprüche

1. Kraftstoffeinspritzdüse für Brennkraftmaschinen mit einem Düsenkörper (10), in dem ein mit einem Kraftstoffzulaufkanal (47) verbundener Druckraum (21) und am brennraumseitigen Ende ein Ventilsitz (18) gebildet sind, mit einer Ventilnadel (15), welche an ihrem brennraumseitigen Ende einen mit dem Ventilsitz (18) am Düsenkörper (10) zusammenwirkenden, nach außen öffnenden Schließkopf (16) und einen abgesetzten, den Druckraum (21) axial begrenzenden vom Kraftstoff beaufschlagten Kolben (20) hat, mit einer die Ventilnadel (15) mit der Dichtfläche des Schließkopfes (16) entgegen der Kraftstoffströmung gegen den Ventilsitz (18) spannenden Schließfeder (40) und mit nadelhubabhängig steuerbaren Spritzöffnungen im Kolben (20) der Ventilnadel (15), wobei der unmittelbar stromaufwärts an den Schließkopf (16) anschließende Kolben (20) eine axial zum Druckraum (21) hin offene Ausnehmung (25) hat, dadurch gekennzeichnet, daß die Ausnehmung (25) umfangeseitig von einem Mantel (26) und radial innen vom Schaft (14) der Ventilnadel (15) begrenzt ist, und daß die Spritzöffnungen Teil von den Mantel (26) durchsetzenden Durchbrüchen (30; 33) sind, die axial versetzt von der Dichtfläche (17) des Schließkopfes (16) im Umfang des Mantels (26) münden, wobei der die Spritzöffnungen aufnehmende Kolben (20) und die Ventilnadel (15) ein einteiliges Bauteil bilden.

2. Kraftstoffeinspritzdüse nach Anspruch 1, dadurch gekennzeichnet, daß die Ausnehmung (25) im Kolben (20) zum Druckraum (21) hin weit geöffnet ist, und daß die Durchbrüche (30; 33) bis zum Grund (24) der Ausnehmung (25) reichen.

3. Kraftstoffeinspritzdüse nach einem der Ansprüche 1 bis 2, dadurch gekennzeichnet, daß die Achsen der Spritzlöcher (30) in einem stumpfen Kegelmantel verlaufen.

4. Kraftstoffeinspritzdüse nach einem der Ansprüche 1 bis 3, dadurch gekennzeichnet, daß die Durchbrüche (30, 33) einen langgestreckten, parallel zur Mittelachse der Ventilnadel 15 verlaufenden Querschnitt haben.

5. Kraftstoffeinspritzdüse nach Anspruch 4, dadurch gekennzeichnet, daß sich der Querschnitt der Durchbrüche (30, 33) vom Grund zur Stirnseite des Kolbens (20) erweitert.

6. Kraftstoffeinspritzdüse nach Anspruch 5, dadurch gekennzeichnet, daß der Querschnitt der Durchbrüche (30, 33) die Form eines Rechtecks, Dreiecks oder Ovals hat.

7. Kraftstoffeinspritzdüse nach einem der vorhergehenden Ansprüche 1 bis 6, dadurch gekennzeichnet, daß die Durchbrüche (30, 33) als den Mantel (26) des Kolbens (20) durchsetzende Löcher (30) ausgebildet sind.

8. Kraftstoffeinspritzdüse nach einem der Ansprüche 1 bis 6, dadurch gekennzeichnet, daß die Durchbrüche (30, 33) als den Mantel (26) des Kolbens (20) von dessen Stirnseite her durchsetzende Nuten (33) ausgebildet sind.

9. Kraftstoffeinspritzdüse einander nach Ansprüche 1 bis 8, dadurch gekennzeichnet, daß am Übergang von der Dichtfläche (17) und dem Kolben (20) des Schließkopfes (16) ein Freistich (23) angeordnet ist.

10. Kraftstoffeinspritzdüse nach Anspruch 9, dadurch gekennzeichnet, daß zwischen der Dichtfläche (17) des Schließkopfes (16) und dem Freistich (23) eine Ringfläche (19) angeordnet ist, deren Kegelwinkel stumpfer ist als der der Dichtfläche (17).

## Claims

1. Fuel injection nozzle for internal combustion engines with a nozzle body (10) in which a pressure space (21) connected to a fuel feed passage (47) and, at the combustion-chamber end, a valve seat (18) are formed, with a valve needle (15) which, at its combustion-chamber end, has a closing head (16) that opens towards the outside and interacts with the valve seat (18) on the nozzle body (10) and has an offset piston (20) delimiting the pressure space (21) axially and acted upon by the fuel, with a closing spring (40) tensioning the valve needle (15) against the valve seat (18) with the sealing surface of the closing head (16), counter to the flow of fuel, and with spray openings, controllable as a function of the needle stroke, in the piston (20) of the valve needle (15), the piston (20), which directly adjoins the closing head (16) in the upstream direction, having a recess (25) open axially towards the pressure space (21), characterized in that the recess (25) is bounded at the periphery by a shell (26) and radially at the inside by the stem (14) of the valve needle (15), and in that the spray openings are part of apertures (30; 33) which penetrate the shell (26) and emerge in the circumference of the shell (26) at a location axially offset from the sealing surface (17) of the closing head (16), the piston (20) accommodating the spray openings and the valve needle (15) forming a one-piece component.

2. Fuel injection nozzle according to Claim 1, characterized in that the recess (25) in the piston (20) is open wide towards the pressure space (21) and in that the apertures (30; 33) extend as far as the base (24) of the recess (25).

3. Fuel injection nozzle according to either of Claims 1 and 2, characterized in that the axes of the spray holes (30) extend along the lateral surface of an obtuse cone.

4. Fuel injection nozzle according to one of Claims 1 to 3, characterized in that the apertures (30, 33) have an elongate cross-section extending parallel to the centre line of the valve needle 15.

5. Fuel injection nozzle according to Claim 4, characterized in that the cross-section of the apertures (30, 33) widens from the base to the end of the piston (20).

6. Fuel injection nozzle according to Claim 5, characterized in that the cross-section of the apertures (30, 33) has the shape of a rectangle, triangle or oval.

7. Fuel injection nozzle according to one of preceding Claims 1 to 6, characterized in that the apertures (30, 33) are designed as holes (30) penetrating the shell (26) of the piston (20).

8. Fuel injection nozzle according to one of Claims 1 to 6, characterized in that the apertures (30, 33) are designed as grooves (33) which penetrate the shell (26) of the piston (20), starting from the end of the latter.

9. Fuel injection nozzle according to Claims 1 to 8, characterized in that a relief cut (23) is arranged at the transition from the sealing surface (17) and the piston (20) of the closing head (16).

10. Fuel injection nozzle according to Claim 9, characterized in that an annular suface (19), the angle of taper of which is more obtuse than that of the sealing surface (17), is arranged between the sealing surface (17) of the closing head (16) and the relief cut (23).

## Revendications

1. Injecteur de carburant pour moteurs a combustion interne comprenant un corps d'injecteur (10) avec une chambre de pression (21) reliée à un canal d'alimentation en carburant (47) et un siège de clapet (18) à l'extrémité du côté de la chambre de combustion, une aiguille d'injecteur (15) dont l'extrémité située du côté de la chambre de combustion comporte une tête d'obturation (16) coopérant avec le siège de clapet (18) du corps (10), s'ouvrant vers l'extérieur et ayant un piston (20), étagé délimitant axialement la chambre de pression (21) et sollicité par le carburant, un ressort d'obturation (40) fermant l'aiguille d'injecteur (15) avec la surface d'étanchéité de la tête d'obturation (16) contre l'écoulement de carburant, pour l'appliquer contre le siège de clapet (18) et des orifices d'injection commandés en fonction de la course de l'aiguille, ces orifices étant réalisés dans le piston (20) de l'aiguille d'injecteur (15), le piston (20) adjacent directement en aval à la tête d'obturation (16) ayant une cavité (25) ouverte axialement vers la chambre de pression (21), caractérisé en ce que la cavité (25) est délimitée à la périphérie par une enveloppe (26) et radialement à l'intérieur par la tige (14) de l'aiguille d'injecteur (15) et les orifices d'injection font partie de passages (30, 33) traversant l'enveloppe (26), qui débouchent avec un décalage axial de la surface d'étanchéité (17) de la tête d'obturation (16) à la périphérie de l'enveloppe (26), le piston (20) avec les orifices d'injection et l'aiguille d'injecteur (15) ne constituant qu'une seule pièce.

2. Injecteur de carburant selon la revendication 1, caractérisé en ce que la cavité (25) du piston (20) s'ouvre en s'élargissant vers la chambre (21) et les passages (30, 33) vont jusqu'au fond (24) de la cavité (25).

3. Injecteur de carburant selon l'une des revendications 1 et 2, caractérisé en ce que les axes des orifices d'injection (30) se situent sur une enveloppe conique d'angle obtus.

4. Injecteur de carburant selon l'une des revendications 1 à 3, caractérisé en ce que les passages (30, 33) ont une section, allongée, parallèle à l'axe de l'aiguille d'injecteur (15).

5. Injecteur de carburant selon la revendication 4, caractérisé en ce que la section des passages (30, 33) s'élargit du fond vers la face frontale du piston (20).

6. Injecteur de carburant selon la revendication 5, caractérisé en ce que la section des passages (30, 33) a la forme d'un rectangle, d'un triangle ou d'un ovale.

7. Injecteur de carburant selon l'une des revendications précédentes 1 à 6, caractérisé en ce que les passages (30, 33) sont réalisés sous la forme d'orifices (30) traversant l'enveloppe (26) du piston (20).

8. Injecteur de carburant selon l'une des revendications 1 à 6, caractérisé en ce que les passages (30, 33) sont réalisés sous la forme de rainures (33) traversant l'enveloppe (26) du piston (20) à partir de sa face frontale.

9. Injecteur de carburant selon l'une des revendications 1 à 8, caractérisé par un dégagement (23) réalisé à la jonction entre la surface d'étanchéité (17) et le piston (20) de la tête d'obturation (16).

10. Injecteur de carburant selon la revendication 9, caractérisé par une surface annulaire (19) entre la surface d'étanchéité (17) de la tête d'obturation (16) et le dégagement (23), surface dont l'angle au sommet est plus obtus que celui de la surface d'étanchéité (17).
